# EUROPEAN PATENT APPLICATION

(11) **EP 2 873 320 A1**
(43) Date of publication of application: **20.05.2015**
(21) Application number: 13817614.4
(22) Date of filing: 15.05.2013
(51) Int. Cl.: A01N 25/22, A01N 25/24, A01N 33/02, A01N 33/04, A01N 57/10, A01P 13/00

(54) **ADJUVANT COMPOSITION FOR USE IN HERBICIDAL FORMULATIONS CONTAINING GLYPHOSATE, USE OF THE ADJUVANT COMPOSITION, HERBICIDAL FORMULATIONS CONTAINING GLYPHOSATE AND USE OF THE HERBICIDAL FORMULATIONS**

(30) Priority: 13.07.2012 BR 102012017464
(71) Applicant: Oxiteno S.A. Industria e Comercio, Sao Paulo - SP 01317-001 (BR)
(72) Inventor: CASTELANI, Priscila, 09080-300 Santo André - SP (BR); JORGE, Alvim, 04713-002 São Paulo - SP (BR); CELLA, Rodrigo, 04713-002 São Paulo SP (BR)
(74) Representative: Wibbelmann, Jobst
(86) International application number: PCT/BR2013/000162
(87) International publication number: WO 2014/008562

(57) **Abstract**

The present invention relates to a novel adjuvant composition for use in herbicide formulations containing high concentrations of glyphosate salts, as well as herbicide formulations containing a novel adjuvant composition. The adjuvant composition of the present invention comprises one or more urea alkoxylated derivatives and can also contain further surfactants. The novel adjuvant composition described in the present invention can be incorporated in herbicide formulations which contain glyphosate salts, such as MIPA, potassium, MEA, TEA or mixtures thereof. These herbicide formulations may also contain additional herbicides in their composition. These glyphosate containing herbicide formulations can be used in liquid sprays for controlling weeds. In addition to being compatible with various glyphosate salts at different concentrations, the adjuvant composition of the present invention has shown to be capable of improving stability and agronomic effectiveness of these formulations.

## Description

### FIELD OF THE INVENTION

The present invention relates to a new adjuvant composition, comprising at least one alkoxylated urea derivative and used to increase the agronomic efficacy of herbicide formulations containing high concentrations of glyphosate salts. The present invention further describes herbicide formulations comprising this new adjuvant composition.

### BACKGROUND OF THE INVENTION

The need for using herbicide formulations in agriculture is essential to increase crop yield and to ensure the production of food for a growing world population. From among all the herbicides used in agriculture to combat weeds, n-phosphomethylglicine is the most commonly used, which is widely known as glyphosate.

Glyphosate is a non-selective foliar herbicide that is, once applied on leaves it is absorbed and transferred by the plant serving to inhibit an enzyme involved in the synthesis of aromatic amino acids causing the plant to die. Due to its low toxicity, low waste indices, high effectiveness in a broad range of pest species and for being easily obtained and synthesized, glyphosate has rapidly become popular in the market. Introduction of glyphosate in the market under the brand name Roundup^{®} made the adoption of the direct-planting system possible, which consists of directly seeding the soil with no need for previous preparation thereof using heavy equipment, hence saving time. In addition, the development of genetically engineered (GE) soy seeds has further disseminated the use of glyphosate, enabling the application thereof on already emerged crops, causing it to be free of weeds to be able to achieve full development.

In a typical formulation, glyphosate is in the form of a salt, being neutralized with a base, usually monoisopropylamine (MIPA), potassium hydroxide (KOH), ammonia (NH₃), monoethanolamine (MEA), triethanolamine (TEA) or mixtures thereof, so as to become water-soluble. In spite of the evident advantages in controlling weeds, the glyphosate molecule has slow absorption, which decreases its agronomic efficacy. In order to solve the problem, North American patent US3799758 taught a glyphosate containing herbicide formulation, a surfactant, which could belong to one of the following groups: alkylbenzene or alkyl naphthalene sulfonates, sulphated fatty alcohols, amines or acid amines, long chain sodium isothionate acid esters, sodium sulfocuccinate esters, sulphated vegetable oils, tertiary acetylenic glycols and ethoxylated alkyl amine. In the invention of US3799758, surfactants belonging to the group of ethoxylated alkyl amines were preferred in the majority of the formulations due to the high efficiency thereof.

However, using ethoxylated alkyl amines in glyphosate-containing formulations still imposes a few problems. The first is caused by the compatibility of these surfactants with the different glyphosate salts. For example, it is known that tallow fatty amine with 15 moles of ethylene oxide is compatible with MIPA glyphosate, while such a compatibility does not occur when the glyphosate counter-ion is potassium. In practice, such an incompatibility causes segregation of one of these formulation components, causing phase separation over time.

The phenomenon of phase separation is even more pronounced and more difficult to be overcome in formulations having high glyphosate salt concentrations, which makes it even more difficult to use ethoxylated alkyl amines in these formulations. The use of concentrated formulations is more desirable in terms of sustainability since, among other advantages, it results in an economy in packaging and logistic-related costs, as all the packages of defensive agents have to be collected by their manufacturing companies for appropriate disposal. To obtain more concentrated glyphosate-containing formulations, the choice of potassium salt is preferred due to its high density. In contrast, compatibility of this salt with surfactants is quite inferior compared to other salts, rendering this formulation less usual in the market.

Another known problem of ethoxylated alkyl amines is their high dermal and eye irritability, and formulations containing them require special care during handling. One approach to overcome this problem is using additives that reduce irritability of said amines, as described in North American patents US5703015 and US5389598 which use, respectively, phosphated ethoxylated alkyl phenol and mono and diacids to perform this task. In spite of that, these additives may present incompatibility problems depending on the glyphosate salt. The best way is to substitute ethoxylated alkyl amines with surfactants having low eye irritability in glyphosate-containing formulations, without losing its agronomic efficacy.

Thus, the search for novel surfactants and adjuvants compatible with several glyphosate salts at high concentrations, which ensure its agronomic efficacy and have low eye irritability has been a constant challenge to formulators. Different classes of surfactants have been tested for this application, but the obtained formulation not always has all the desired requirements. Examples of surfactants already used in glyphosate-containing formulations are described elsewhere and include alkylpolyglucosides (US5356861), ethoxylated etheramines (US5750468), hydrophobically modified polyglycerols (WO2011029561), ethoxylated imidazolines (WO2009127020) and phosphated esters (FR9006543).

It is known that the use of adjuvants having mineral or vegetable oil-based liquid sprays and nitrogenated additives such as ammonium sulfate and urea in the liquid spray can increase the absorption of herbicides present in this spray, as these additives have a direct action on the leaves' cuticle (VARGAS, L., ROMAN, E. S., Conceitos e Aplicações dos Adjuvantes, Embrapa Wheat, online publications no. 56, August, 2006).

Nevertheless, using urea as a nitrogenated activator in the liquid spray containing herbicides may have problems, since the solubilization thereof in the spray momentarily decreases the water temperature, which can cause incompatibility between actives already present in the spray. In addition, some commercially available ureas are not completely soluble and can lead to clogging of the nozzles at the time of application in the field (KISSMAN, K. G. Adjuvantes para caldas de produtos fitossanitários. In: GUEDES, J. V. C. and DORNELLES, S. B. Tecnologia e Segurança na Aplicação de Agrotóxicos, Sociedade de Agronomia de Santa Maria, 1998, p. 39-51).

It has now been surprisingly noted that alkoxylated urea derivatives have excellent compatibility not only with MIPA glyphosate salts, but with potassium glyphosate at high concentrations, thereby having advantages over other surfactants. These urea alkoxylated derivatives are easy to handle liquid compounds and can be used directly as adjuvants contained in the glyphosate formulations. In addition, these urea derivatives have shown excellent agronomic effectiveness results in controlling weeds.

The use of these urea alkoxylated derivatives has not been explored in agrochemical formulations, but several patents describe the use of this class of molecules to different purposes, for example, as intermediates in the synthesis of polyurethane extenders (US4191835), colorant solubilizers in formulations of print inks (JP63024546), treatment of scalp desquamation such as dandruff and seborrhea in cosmetic formulations of hair shampoos and conditioners (WO2007054833), photostabilizers in sunscreen lotions (US20060177394) and cosmetic creams as anti-skin aging agents (US20060127343).

Thus, it is an object of the present invention a new adjuvant composition comprising alkoxylated ureas for use in herbicide formulations containing glyphosate salts at high concentrations. These herbicide formulations may also contain additional herbicides in their composition. It is another object of this invention a herbicide formulation comprising the adjuvant composition. The advantages of this novel composition of this invention will be apparent from the following description.

### SUMMARY OF THE INVENTION

The present invention relates to a novel adjuvant composition for use in herbicide formulations containing high concentrations of glyphosate salts, as well as herbicide formulations containing a novel adjuvant composition. The adjuvant composition of the present invention comprises one or more urea alkoxylated derivatives and can also contain further surfactants. The novel adjuvant composition described in the present invention can be incorporated in herbicide formulations which contain glyphosate salts, such as MIPA, potassium, MEA, TEA or mixtures thereof. These herbicide formulations may also contain additional herbicides in their composition. The glyphosate containing herbicide formulations can be used in liquid sprays for controlling weeds. In addition to being compatible with various glyphosate salts at different concentrations, the adjuvant composition of the present invention has shown to be capable of improving stability and agronomic effectiveness of these formulations.

### DETAILED DESCRIPTION OF THE INVENTION

The novel adjuvant composition referred to in the present invention comprises one or more alkoxylated urea derivatives and can also contain further surfactants. The alkoxylated urea derivatives suited for use in the present invention are those having general formula (I): 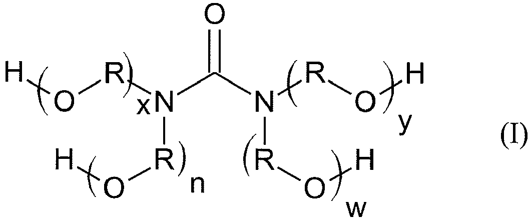 where:
R is a C₂₋₄ hydrocarbyl,
x is an number of from 1 to 8,
n is a number of from 0 to 8,
y is a number of from 0 to 8,
w is a number between 0 and 8.

The aforementioned urea derivatives can be obtained by reacting urea with alkylene oxides represented by scheme (II). 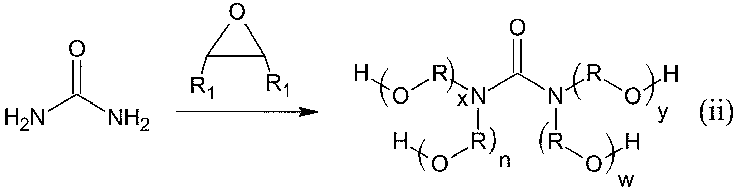 where:
R₁ are CH₃ or H independently from each other,
R is a C₂₋₄ hydrocarbyl,
x is an number of from 1 to 8,
n is a number of from 0 to 8,
y is a number of from 0 to 8,
w is a number between 0 and 8.

This is an already well-established method, as described in patents US3519680, US3038008 and US4155869 and variations thereof can be easily found in the literature (ZARZYKA-NIEMIEC, I. Polyhydroxyalkylation of urea with ethylene carbonate and application of obtained products as components of polyurethane foams, e-Polymers, 2008, no. 166).

From among the surfactants comprised in this composition, the most common examples are: ethoxylated alkyl ethers, phosphated ethoxylated alkyl ethers, ethoxylated alkyl etheramines, alkylpolyglucosides, ethoxylated alkylpolyglucosides, ethoxylated imidazolines, polysiloxane derivatives, alkyl dimethyl amine oxides, alkyl dimethyl betaines, alkyl amido propyl amines and ethoxylated alkyl amines.

One of the advantages of the present invention is the ease of compatibilization of the alkoxylated urea derivatives having general formula (I) with these other surfactants, since these mixtures of compounds can lead to a greater increase of the action of the glyphosate-containing herbicide formulations due to a synergistic effect between them.

The present invention provides an adjuvant composition in amounts of from 50 to 100% by weight of the urea alkoxylated derivatives, preferably of from 80 to 100%, and from 0 to 50% of the other aforementioned surfactants, preferably of from 0 to 20%.

In a preferred embodiment of the present invention, the adjuvant composition comprises 100% of a alkoxylated urea derivative of general formula (I) wherein R is a C₃ branched chain and x, n, y and w are 1.

In another preferred embodiment, the adjuvant composition comprises 100% of an alkoxylated urea derivative of general formula (I) wherein R is a C₂ linear chain and x, n, y and w as 1.

In another preferred embodiment of the present invention, the adjuvant composition comprises 80% of an alkoxylated urea derivative of general formula (I) wherein R is a C₃ branched chain and x, n, y and w are 1; and 20% of an ethoxylated tallow fatty amine as another surfactant.

The novel adjuvant compositions described herein are compatible and can be used as adjuvants contained in glyphosate-containing herbicide formulations. These herbicide formulations can further contain in their composition, in addition to glyphosate, other herbicides from the following chemical classes: 4-(aryloxyphenoxy)alcanoic acid, 2-(4-aryloxyphenoxy)alcanoic acid, 1,3,5-triazine, 1,3,5-triazine-2,4-dione, 2-(aryloxyphenoxy)propionamide, 2,6-dinitroaniline, 2-chloroacetanilide, acetamide, anilide, aromatic acid, arylaminopropionic acid, aryloxycarboxylic acid, aryloxyphenoxypropionic acid, benzamide, benzenedicarboxylic acid, benzimidazole, benzofuran, benzoic acid, benzonitrile, benzothiadiazinone, bipyridylium, carbamate, chloroacetamide, alkanamide, cyclohexanodione oxime, cyclohexenedicarboximide, dinitroaniline, dinitrophenol, diphenyl ether, substituted homoalanine, halogenated alcanoic acid, halogenated aliphatic, hydroxybenzonitrile, imidazolinone, isoxazole, isoxazolidinone, N-phenylphthalimide, organoarsenic, organochloride, organophosphorus, isoxazole, oxadiazole, oxadiazolone, oxyacetamide, phenoxycarboxylic acid, phenyl carbamate, phenylpyrazole, phenylpyridazine, phenylurea, phosphinic acid, phosphoroamidate, phosphorodithioate, phtalamate, pyrazole, pyridazine, piridazinone, pyridin, piridinone, pyridinecarboxyamide, pyridine carboxylic acid, piyridinyloxyalcanoic acid, pyrimidinedione, pyrimidine, pyrimidinyloxybenzoic acid, quinolinecarboxylic acid, thiocarbamate, sulphanilyl carbamate, semicarbazone, sulfonylurea, thiadiazole, triazine, triazinone, triazole, triazolone, triazolinone, triazole carboxamide, triazolopyrimidine, triazolopyrimidine sulfanilide, triketone and uracil, urea and methyl isothiocyanate.

The herbicide formulations referred to by the present invention can comprise glyphosate salts, the novel abovementioned adjuvant compositions, antifoaming agent and water. The antifoaming agent has the role of preventing suds formation during manufacture of the formulation and dilution thereof in the liquid spray to be applied to the field.

The herbicide formulations referred to in the present invention comprise of from 300 g/L to 600 g/L in acid equivalents (a.e.) of glyphosate, preferably from 360 to 540 g/L; from 50 to 400 g/L of one or more neutralizing bases, preferably from 70 to 200 g/L; from 50 to 200 g/L of one of the aforementioned adjuvant compositions, preferably from 90 to 160 g/L; from 0.5 to 2.0 g/L of an anti-foaming agent, preferably from 1.0 to 1.2 g/L; and water q.s.p. 1L.

In a preferred embodiment of the present invention, the glyphosate-containing herbicide formulation comprises 360 g/L a.e. of glyphosate, neutralized with 120 g/L MIPA, containing 120 g/L of the adjuvant composition comprising 100% of an alkoxylated urea derivative of general formula (I) wherein R is a C₂ linear chain and x, n, y and w are 1, 1.0 g/L of anti-foaming agent and water q.s.p. 1 L.

In another preferred embodiment of the present invention, the glyphosate-containing herbicide formulation comprises 500 g/L a.e. of glyphosate, neutralized with 345 g/L KOH 50%, containing 100 g/L of the adjuvant composition comprising 100% of an alkoxylated urea derivative of general formula (I) wherein R is a C₃ branched chain and x, n, y and w are 1, 1.0 g/L of anti-foaming agent and water q.s.p. 1 L.

In still another preferred embodiment of the present invention, the glyphosate containing herbicide formulation comprises 480 g/L a.e. glyphosate, neutralized with 168 g/L MIPA, containing 90 g/L of the adjuvant composition comprising 80% of am alkoxylated urea derivative of general formula (I) wherein R is a C₃ branched chain, and x, n, y and w are 1; and 20% of an ethoxylated tallow fatty amine as another surfactant, 1,0 g/L of anti-foaming agent and water q.s.p. 1 L.

The glyphosate-containing herbicide formulations described herein can be used in liquid sprays for controlling weeds as they have a high agronomic efficiency performance when applied in greenhouse and field assays.

Due to the chemical nature of urea alkoxylated derivatives, the adjuvant compositions of the present invention have several advantages such as for example ease of being directly incorporated into the glyphosate-containing herbicide formulations resulting in formulations containing low-viscosity and easy to handle adjuvants. In addition, the glyphosate-containing herbicide formulations prepared with these adjuvant compositions have shown to be quite stable, being compatible with several glyphosate salts, including high concentrations of potassium. The adjuvant compositions were also compatible and stable with MEA salts and TEA and MEA mixed salts at high concentrations. Thus, the adjuvant composition described herein provides the formulator with versatility when choosing the glyphosate salt at high concentrations, which fact is uncommon for most of the surfactants and adjuvants used in glyphosate-containing herbicide formulations. Another advantage of using the new adjuvant composition in glyphosate-containing herbicide formulations refers to the fact that the urea ethoxylated derivative promotes rapid absorption and translocation of glyphosate into plants, leading to a high performance of the herbicide.

To assess stability of a glyphosate containing herbicide formulation, the cloud point (CP) can be measured. More stable formulations tend to have higher cloud point (become cloudy at higher temperatures) than less stable formulations. It is common sense that the cloud point of a stable herbicide formulation containing glyphosate should be higher than 60°C (Nandula, V. (Ed.) Glyphosate Resistance in Crops and Weeds, 2010, 1st edition, John Wiley and Sons, New Jersey, USA). In the instant invention, the glyphosate-containing herbicide formulations obtained with the adjuvant compositions had high cloud points and good stability in shelf stability tests at different temperatures carried out for a period of three months, as described in the examples, which are not intended to limit the invention.

**Table 1. Examples of glyphosate-containing herbicide formulations containing the adjuvants of the invention**

| **Glyphosate salt** | **conc. (g/L a.e.)** | **Adjuvant composition** | **CP (°C)** | **Appearance after 3 months at 54°C** |
|---|---|---|---|---|
| MIPA | 360 | Urea 4EO | >100 | Clear, amber |
| MIPA | 480 | Urea 4EO | >100 | Clear amber |
| MEA | 480 | Urea 4EO | >100 | Clear, amber |
| K | 500 | Urea 4PO | >100 | Clear, colorless |
| MIPA | 360 | Urea 4PO | >100 | Clear, colorless |
| MIPA | 480 | Urea 4PO | >100 | Clear, colorless |
| TEA/MEA* | 480 | Urea 4PO | 92 | Clear, colorless |
| MEA | 480 | Urea 4PO | >100 | Clear, colorless |
| MIPA | 360 | Urea 4PO/4EO | >100 | Clear, yellowish |
| MIPA | 480 | Urea 4PO/4EO | >100 | Clear, yellowish |
| K | 500 | 80% urea 4PO and 20% tallow amine 5EO | >100 | Clear, yellowish |

| | | | | |
|---|---|---|---|---|
| * mixed salt of glyphosate, with 60% TEA / 40% MEA by mass. | | | | |

## Claims

1. An adjuvant composition for use in glyphosate-containing herbicide formulations, **characterized by** comprising an alkoxylated urea derivative and can also contain further surfactants.

2. The adjuvant composition of claim 1, **characterized in that** the alkoxylated urea derivative has general formula (I): 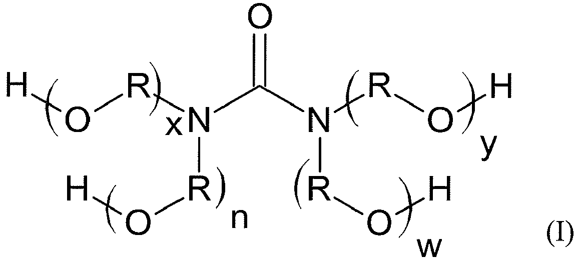 where:
R is a C₂₋₄ hydrocarbyl,
x is an number of from 1 to 8,
n is a number of from 0 to 8,
y is a number of from 0 to 8,
w is a number between 0 and 8.

3. The adjuvant composition of claim 1, **characterized in that** it further contains other surfactants selected from among: ethoxylated alkyl ethers, phosphated ethoxylated alkyl ethers, ethoxylated alkyl etheramines, alkylpolyglucosides, ethoxylated alkylpolyglucosides, ethoxylated imidazolines, polysiloxane derivatives, alkyl dimethyl amine oxides, alkyl dimethyl betaines, alkyl amido propyl amines and ethoxylated alkyl amines.

4. The adjuvant composition of any one of claims 1 to 3, **characterized in that** it comprises: from 50 to 100% by weight of the urea alkoxylated derivatives, preferably from 80 to 100% by weight; and, from 0 to 50wt% of other surfactants, preferably from 0 to 20wt%.

5. The use of the adjuvant composition of any one of claims 1 to 4, **characterized in that** it is in herbicide formulations containing glyphosate salts, such as MIPA, potassium, MEA, TEA or mixtures thereof.

6. The use of the adjuvant composition of any one of claims 1 to 4, **characterized in that** it is in herbicide formulations further containing other herbicides in its composition.

7. Glyphosate-containing herbicide formulations, **characterized in that** it comprises: glyphosate salts, such as MIPA, potassium, MEA, TEA or mixtures thereof; the adjuvant compositions as defined in any one of claims 1 to 4; anti-foaming agents; and, water.

8. The glyphosate-containing herbicide formulations of claim 7, **characterized in that** it comprises: from 300 g/L to 600 g/L in acid equivalents (a.e.) of glyphosate, preferably from 360 to 540 g/L; from 50 to 400 g/L of one or more neutralizing bases, preferably from 70 to 200 g/L; from 50 to 200 g/L of one of the adjuvant compositions defined in any one of claims 1 to 4, preferably from 90 to 160 g/L; from 0.5 to 2.0 g/L of an anti-foaming agent, preferably from 1.0 to 1.2 g/L; and, water q.s.p. 1 L.

9. The use of the glyphosate-containing herbicide formulations of claims 7 or 8, **characterized in that** it is in liquid sprays for controlling weeds.
